# EUROPÄISCHE PATENTANMELDUNG

(11) **EP 0 818 924 A2**
(43) Veröffentlichungstag der Anmeldung: **14.01.1998**
(21) Anmeldenummer: 97202052.3
(22) Anmeldetag: 03.07.1997
(51) Int. Cl.: H04N 5/77, H04N 5/28

(54) **Anordnung zur Aufnahme und Wiedergabe von Videosignalen**

(30) Priorität: 12.07.1996 DE 19628187
(71) Anmelder: Philips Patentverwaltung GmbH, 22335 Hamburg (DE); Philips Electronics N.V., 5621 BA Eindhoven (NL)
(72) Erfinder: Fegesch, Henrik, Röntgenstrasse 24, 22335 Hamburg (DE); Wüst, Wilfried, Röntgenstrasse 24, 22335 Hamburg (DE)
(74) Vertreter: Erdmann, Anton, Dipl.-Ing.

(57) **Zusammenfassung**

Die Erfindung bezieht sich auf eine Anordnung zur Aufnahme und Wiedergabe von Videosignalen mit mindestens einer Kameraeinheit (10, 12; 14, 15) zur Erzeugung von Videosignalen, mit mindestens einem an die erzeugten Videosignale angepaßten Aufzeichnungs-/Wiedergabegerät (22) und mit mindestens einem Slomo-Programmer (18, 19) zur Steuerung des Aufzeichnungs-/Wiedergabegerätes (22) bei Zeitlupenbetrieb. Um den Aufwand bei Zeitlupen-Aufnahmen zu verringern und um gleichzeitig Super-Slow-Motion-Betrieb zu ermöglichen, wird gemäß der Erfindung vorgeschlagen, daß die Kameraeinheit (10, 12; 14, 15) eine Einrichtung (13) zum Umschaltung der Bildwechselfrequenz von einer dem Fernsehstandard entsprechenden Bildwechselfrequenz auf eine gegenüber dem Fernsehstandard erhöhte Bildwechselfrequenz aufweist und daß als Aufzeichnung-/Wiedergabegerät ein RAM-Recorder (22) vorgesehen ist, der die von der Kameraeinheit (10, 12; 14, 15) erzeugten Videosignale als digitale Signale aufzeichnet und wiedergibt.

## Beschreibung

Die Erfindung bezieht sich auf eine Anordnung zur Aufnahme und Wiedergabe von Videosignalen
- mit mindestens einer Kameraeinheit zur Erzeugung von Videosignalen,
- mit einem an die erzeugten Videosignale angepaßten Aufzeichnungs-/Wiedergabegerät und
- mit einem Slomo-Programmer zur Steuerung des Aufzeichnungs-/Wiedergabegerätes bei Zeitlupenbetrieb.

Eine solche Kameraeinheit kann z.B. entweder ein Kamerakopf (standalone) oder ein Kamerakopf mit einer Basisstation sein.

Anordnungen der eingangs genannten An sind bekannt. Sie werden vorzugsweise verwendet in sogenannten Fernseh-Übertragungswagen, mit deren Hilfe z.B. Sportveranstaltungen, wie Fußballspiele oder Tennisturniere, on-line übertragen werden können. Mit Hilfe der dabei verwendeten Kameraeinheiten wird das Ereignis z.B. vor Ort aufgenommen, aufgezeichnet und direkt an die Zuschauer übertragen. Dabei arbeiten die Kameraeinheiten mit einer im Fernsehstandard festgelegten Bildwechselfrequenz von 50 Hz. Bei dieser Art des Betriebes wird das Ereignis also permanent aufgezeichnet, Zeitlupenaufnahmen für bestimmte Szenen können bei dieser Betriebsart erst nach Ende des Ereignisses, aus dem vollständigen Band heraus, abgespielt und übertragen werden.

Üblicherweise werden jedoch bei der Übertragung eines bestimmten Ereignisses mit Hilfe eines Übertragungswagens mehrere Kameraeinheiten, die mit der Standard-Bildwechselfrequenz von 50 Hz arbeiten, als spezielle Slow-Motion-Kameraeinheiten verwendet. Dabei ist normalerweise jeder Slow-Motion-Kameraeinheit ein entsprechendes, angepaßtes Magnetband-Aufzeichnungs-/Wiedergabegerät (MAZ) zugeordnet. Mit Hilfe derartiger Slow-Motion-Kameraeinheiten können bestimmte Bildszenen, z.B. Tor-Szenen, während des Spieles in Zeitlupe für die Fernsehzuschauer wiedergegeben werden. Dabei drückt eine Bedienperson bei Beginn einer bestimmten Bildszene eine Taste eines Bediengerätes zum Setzen einer Zeitmarke. Am Schluß dieser Szene wird durch Druck auf eine andere Taste das Magnetbandgerät auf eine Position zurückgespult, die wenige Sekunden vor der gesetzten Zeitmarke liegt. Dadurch wird erreicht, daß bei einer anschließenden Zeitlupenwiedergabe der aufgezeichneten Szene auch noch die Bilder wiedergegeben werden, die die bestimmte Szene einleiten. Nachteilig bei Verwendung derartiger Magnetbandgeräte ist, daß mit dem Zurückspulen des Magnetbandes einige Sekunden verstreichen, bis die Anfangsposition angefahren ist. Diese Sekunden können nicht zur Zeitlupen-Wiedergabe genutzt werden. In diesen Sekunden kann das durch den Rückspulvorgang blockierte Magnetbandgerät aber auch nicht aufzeichnen, um unmittelbar sich an die bestimmte Szene anschließende weitere interessante Szenen für eine Zeitlupen-Wiedergabe aufzunehmen.

Für schnelle Vorgänge, z.B. für schnelle Tennisspiele, reicht die bisher übliche Slow-Motion-Technik, die mit der Standard-Bildwechselfrequenz von 50 Hz arbeitet, nicht aus. Um dem Fernsehzuschauer Aufnahmen in extremer Zeitlupe zu präsentieren, kommen daher spezielle Zeitlupengeräte zur Anwendung, die die durch den Fernseh-Übertragungsstandard beschränkte Bewegungsauflösung anheben und nicht an einen Fernseh-Übertragungsstandard gebunden sind. Die Kameraeinheiten derartiger Zeitlupengeräte arbeiten mit einer Bildwechselfrequenz von 150 Hz, die somit erheblich höher liegt als die im Fernsehstandard festgelegte Bildwechselfrequenz von 50 Hz. Das von einer derartigen Spezial-Kameraeinheit erzeugte hochaufgelöste Videosignal gelangt, wie bisher, ebenfalls zu einem Aufzeichnungs-/Wiedergabe-Magnetbandgerät, welches jedoch an die spezielle Kameraeinheit mit einer Bildwechselfrequenz von 150 Hz angepaßt sein muß. Von disem Magnetbandgerät wird das von der Kameraeinheit erzeugte hochaufgelöste Videosignal aufgezeichnet, und das aufgezeichnete Videosignal wird sodann zeitversetzt in Zeitlupe wiedergegeben. Derartige spezielle Zeitlupengeräte sind als sogenannte Super-Slow-Motion-Geräte bekannt geworden und werden, da sie sehr teuer und aufwendig sind, in einem üblichen Übertragungswagen neben mehreren normalen Slow-Motion-Kameraeinheiten nur in einfacher Ausführung verwendet.

Durch die US-PS 46 85 002 ist ein Slow-Motion-Fernsehsystem bekannt geworden mit mehreren Kameras und mit Speicherelementen, die den Kameras zugeordnet sind. Bei einer derartigen Bauweise ist ein sofortiger Zugriff auf die gespeicherten Daten nicht möglich.

Der Erfindung liegt die Aufgabe zugrunde, bei einer Anordnung der eingangs genannten Art den Aufwand zu vermindern bei gleichzeitiger Möglichkeit der Aufzeichnung und Übertragung von Videosignalen in Slow-Motion- oder in Super-Slow-Motion-Technik.

Diese Aufgabe wird gemäß der Erfindung dadurch gelöst,
- daß die Kameraeinheit eine Einrichtung zur Umschaltung der Bildwechselfrequenz von einer dem Fernsehstandard entsprechenden Bildwechselfrequenz auf eine gegenüber dem Fernsehstandard erhöhten Bildwechselfrequenz aufweist und
- daß als Aufzeichnungs-/Wiedergabe-Gerät ein RAM-Recorder vorgesehen ist, der die von der Kameraeinheit erzeugten Videosignale als digitale Signale aufzeichnet und wiedergibt.

Wie oben bereits erwähnt, kann eine solche Kameraeinheit z.B. ein Kamerakopf (standalone) oder ein Kamerakopf mit einer Basisstation sein. Die Umschalteinrichtung gemäß der Erfindung kann z.B. im Kamerakopf oder in der Basisstation angeordnet sein.

Dadurch, daß die Kameraeinheit mit einer Einrichtung zur Umschaltung der Bildwechselfrequenz versehen ist, ergibt sich der Vorteil, daß sowohl für normale Fernsehaufzeichnungen als auch für Zeitlupenaufzeichnungen in Super-Slow-Motion-Technik nur noch ein Typ einerKameraeinheit erforderlich ist. Dies ist insbesondere vorteilhaft in den räumlich beengten Fernsehübertragungswagen. Je nach Anwendungsfall kann die umschaltbare Kameraeinheit damit sowohl als herkömmliche Kameraeinheit, die ein Standard-Fernsehsignal abgibt, als auch als Zeitlupen-Kameraeinheit, die ein nicht-standardgemäßes Videosignal abgibt, eingesetzt werden. Damit kann der sonst übliche Platz für die oben genannten speziellen Zeitlupen-Kameraeinheiten mit den zugehörigen Verstärkerzügen und Kontrollpulten eingespart werden.

Dadurch, daß statt eines Magnetbandgerätes als Aufzeichnungs- und Wiedergabegerät nunmehr ein RAM-Recorder vorgesehen ist, ergibt sich der weitere Vorteil, daß dem Fernsehzuschauer nunmehr on-line ohne Zeitverlust Zeitlupen-Wiederaben in "Super-Slow-Motion-"-Qualität präsentiert werden können. Die fortlaufend auf den Plattenspeicher geschriebenen Daten der hochaufgelösten Videosignale sind als virtuelle Files zu betrachten, die durch Auswahl mittels des Slomo-Programmers in Form eines non-linear Editings sofort wieder gelesen und als Zeitlupe auf Sendung gehen können. Ein weiterer Vorteil besteht darin, daß keine Bildszenen bei der Zeitlupen-Wiedergabe verloren gehen, da kein Rückspulen erforderlich ist.

In Ausgestaltung der Erfindung ist vorgesehen, daß der RAM-Rcorder ein Plattenspeicher mit mehreren Kanälen ist, die jeweils einer gesonderten Kameraeinheit zugeordnet werden können. Damit ergibt sich der Vorteil, daß für mehrere Kameraeinheiten nunmehr nur ein einziges Aufnahme-/Wiedergabegerät vorgesehen ist, dessen Kanäle jeweils den einzelnen Kameraeinheiten zugeordnet sind. Damit ergibt sich eine erhebliche Platzersparnis gegenüber solchen Anordnungen, bei denen jeder Kameraeinheit ein gesondertes Magnetband-Aufzeichnungsgerät zugeordnet werden mußte. Dies ist besonders vorteilhaft bei Fernseh-Übertragungswagen, weil regelmäßig mehrere Zeitlupengeräte in derartigen, räumlich beengten Fernseh-Übertragungswagen zur Produktion von Sportveranstaltungen installiert werden.

Durch die Erfindung ergibt sich somit der Vorteil, daß die verwendeten Kameraeinheiten entweder mit der im Fernsehstandard festgelegten Bildwechselfrequenz oder, nach Umschaltung, mit der für einen Super-Slow-Motion-Betrieb erforderlichen hohen Bildwechselfrequenz von z.B. 150 Hz betrieben werden können, wobei gleichzeitig alle Kameraeinheiten auf ein einziges Aufzeichnungs-/Wiedergabegerät geschaltet werden können. Damit ergibt sich die Möglichkeit, bei der Übertragung z.B. eines großen Sportereignisses eine ganz bestimmte Anzahl von Kameraeinheiten mit der im Fernsehstandard festgelegten Bildwechselfrequenz zu betreiben, während eine andere Anzahl von Kameras umgeschaltet ist auf die erhöhte Bildwechselfrequenz, um dem Fernsehzuschauer Aufnahme in extremer Zeitlupe präsentieren zu können. Durch die Umschaltbarkeit einerseits und durch die Verwendung eines einzigen Aufzeichnungs-/Wiedergabegerätes für alle Kameraeinheiten erübrigt sich somit der bisher übliche Aufwand für eine Spezialkamera in Super-Slow-Motion-Funktion mit einem angepaßten Magnetband-Aufzeichnungsgerät.

In der Zeichnung sind in den Fig. 1 bis 5 Ausführungsbeispiele des Gegenstandes gemäß der Erfindung schematisch dargestellt.
Fig. 1 zeigt schematisch eine umschaltbare Kameraeinheit,
Fig. 2 und 3 zeigen zwei Signalfolgen mit verschiedenen Frequenzen,
Fig. 4 zeigt eine Anordnung zur Aufnahme und Wiedergabe von Videosignalen mit zwei Kameraeinheiten und einem zugehörigen RAM-Festplattenrecorder, und
Fig. 5 zeigt schematisch einen Übertragungswagen zur Aufnahme von in Fig. 1 und 3 gezeigten Geräten.

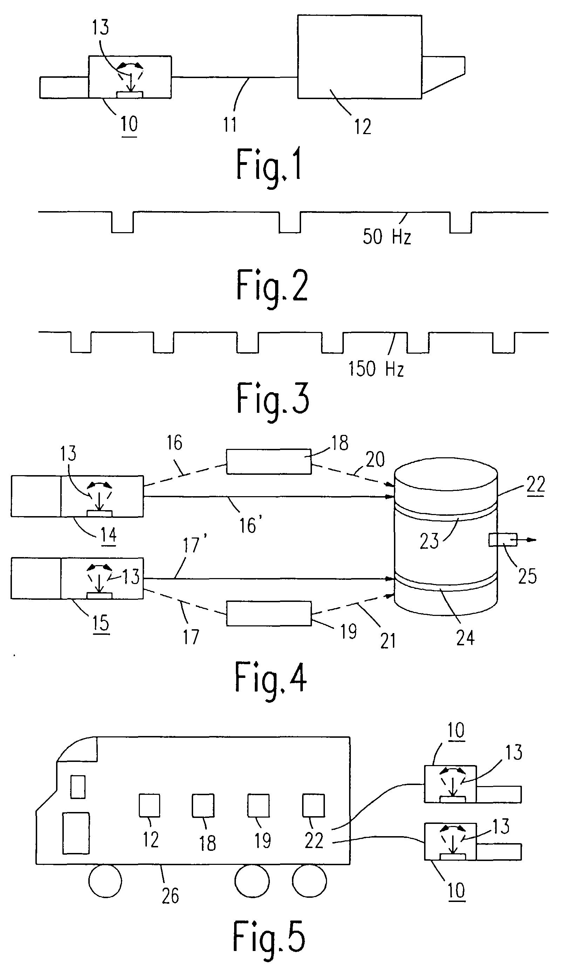

Fig. 1 zeigt eine Kameraeinheit, die einen Kamerakopf 10 und eine über ein Kabel 11 damit verbundene Basisstation 12 aufweist. Der Kamerakopf 10 enthält eine Umschalteinrichtung 13 zur Umschaltung einer im Fernsehstandard festgelegten Bildwechselfrequenz von z.B. 50 Hz auf eine für extreme Zeitlupen-Aufnahmen vorgesehene erhöhte Bildwechselfrequenz von z.B. 150 Hz.

Fig. 2 zeigt eine Signalfolge für eine Standard-Bildwechselfrequenz von 50 Hz und Fig. 3 eine Signalfolge für eine Zeitlupe mit einer Bildwechselfrequenz von 150 Hz.

Fig. 4 zeigt eine Anordnung zur Aufnahme und Wiedergabe von Videosignalen mit zwei Kameraeinheiten 14, 15, die durch Umschalteinrichtungen 13 von einer im Fernsehstandard festgelegten Bildwechselfrequenz von 50 Hz auf eine erhöhte Bildwechselfrequenz von 150 Hz umschaltbar sind. Die Kameraeinheiten 14, 15 sind einerseits über Kabel 16, 17 mit sogenannten Slomo-Programmern 18, 19 verbunden, die ihrerseits über Kabel 20, 21 mit einem RAM-Recorder 22 verbunden sind. Andererseits besteht eine direkte Verbindung zwischen den Kameraeinheiten 14, 15 und dem RAM-Recorder 22 über Kabel 16', 17'. Der Recorder 22 dient als Aufzeichnung-/Wiedergabegerät, welches die von den Kameraeinheiten 14, 15 erzeugten Videosignale als digitale Signale aufzeichnet und wiedergibt. Im Zeitlupen-Betrieb gelangen die von den Kameraeinheiten 14, 15 erzeugten hochaufgelösten Videosignale zu dem RAM-Recorder 22, der von den Slomo-Programmern 18, 19 gesteuert wird. Die am Recorder 22 eingehenden hochaufgelösten Signale werden durch Auswahl mit Hilfe der Slomo-Programmer 18, 19 auf schematisch dargestellten Kanälen 23, 24 gespeichert und können, wie schematisch durch 25 dargestellt ist, sofort wieder ausgelesen werden und als Zeitlupe auf Sendung gehen.

Fig. 5 zeigt schematisch einen Fernseh-Übertragungswagen 26 mit im Innern eingebauten Geräten (z.B. Basisstation 12, Slomo-Programmer 18, 19, RAM-Recorder 22) und mit außerhalb des Wagens 26 aufgebauten Kameraköpfen 10.

## Patentansprüche

1. Anordnung zur Aufnahme und Wiedergabe von Videosignalen
- mit mindestens einer Kameraeinheit (10, 12; 14, 15) zur Erzeugung von Videosignalen,
- mit mindestens einem an die erzeugten Videosignale angepaßten Aufzeichnungs-/Wiedergabegerät (22) und
- mit mindestens einem Slomo-Programmer (18, 19) zur Steuerung des Aufzeichnungs-/Wiedergabegerätes (22) bei Zeitlupenbetrieb,
dadurch gekennzeichnet,
- daß die Kameraeinheit (10, 12; 14, 15) eine Einrichtung (13) zur Umschaltung der Bildwechselfrequenz von einer dem Fernsehstandard entsprechenden Bildwechselfrequenz auf eine gegenüber dem Fernsehstandard erhöhten Bildwechselfrequenz aufweist und
- daß als Aufzeichnungs-/Wiedergabegerät ein RAM-Recorder (22) vorgesehen ist, der die von der Kameraeinheit (10, 12; 14, 15) erzeugten Videosignale als digitale Signale aufzeichnet und wiedergibt.

2. Anordnung nach Anspruch 1, dadurch gekennzeichnet, daß der RAM-Recorder ein Plattenspeicher (22) mit mehreren Kanälen (23, 24) ist, die jeweils einer gesonderten Kameraeinheit (14, 15) zugeordnet werden können.

3. Anordnung nach Anspruch 1 oder 2, dadurch gekennzeichnet, daß die Einrichtung (13) zur Umschaltung der Bildwechselfrequenz von der im Fernsehstandard festgelegten Bildwechselfrequenz von 50 Hz auf eine Bildwechselfrequenz von 150 Hz dient.

4. Anordnung nach einem der Ansprüche 1 bis 3, gekennzeichnet durch die Anwendung in einem Fernseh-Übertragungswagen (26).
